# EUROPEAN PATENT SPECIFICATION

(11) **EP 3 222 480 B1**
(45) Date of publication and mention of the grant of the patent: **02.01.2019**
(21) Application number: 17162154.3
(22) Date of filing: 21.03.2017
(51) Int. Cl.: B60W 10/02, B60W 10/06, B60W 10/08, B60W 20/40, B60W 30/18

(54) **VEHICLE AND CONTROL METHOD FOR VEHICLE**
FAHRZEUG UND STEUERUNGSVERFAHREN FÜR DAS FAHRZEUG
VÉHICULE ET PROCÉDÉ DE COMMANDE DE VÉHICULE

(30) Priority: 24.03.2016 JP 2016060955
(43) Date of publication of application: 27.09.2017
(73) Proprietor: TOYOTA JIDOSHA KABUSHIKI KAISHA, Toyota-shi, Aichi-ken 471-8571 (JP)
(72) Inventor: NAGAI, Kazunari, Toyota-shi, Aichi-ken 471-8571 (JP)
(74) Representative: J A Kemp

(56) References cited:
- EP-A2- 1 201 479
- DE-A1-102011 085 151
- DE-A1-102012 024 213
- DE-A1-102013 020 658
- US-A1- 2013 124 057

## Description

### BACKGROUND OF THE INVENTION

### 1. Field of the Invention

The invention relates to a vehicle including a clutch that connects and disconnects a power transmission path between an engine and a transmission, and a clutch actuator that switches the clutch between an engaged state and a released state, and also relates to a control method for the vehicle.

### 2. Description of Related Art

A control device of a vehicular power transmission system including a transmission that provides a part of a power transmission path between an engine and drive wheels, a clutch that connects and disconnects the power transmission path between the engine and the transmission, and a clutch actuator that switches the clutch between an engaged state and a released state, is known well in the art. The control device performs coasting control under which the clutch is released when a given condition is satisfied during traveling of the vehicle in which the clutch is engaged. For example, a coasting control device described in Japanese Patent Application Publication No. 2012-30709 (JP 2012-30709 A) is one example of the control device. As described in JP 2012-30709 A, when a given coasting start condition is satisfied, the clutch is controlled to the released state, irrespective of operation of a clutch pedal, and coasting control for coasting the vehicle is performed by controlling the engine speed to the idle speed. Then, if an accelerator pedal is depressed by the driver during coasting under the coasting control, the engine speed is increased so as to be equal to a clutch rotational speed (i.e., transmission input rotational speed) for matching of the rotational speeds, and then the clutch is controlled to the engaged state, so that the coasting control is finished.

US 2013/0124057 discloses a method that involves detecting the traveling speed of vehicle and an operation of the speed control unit. The driving mode is automatically selected. The sail mode above the minimum speed of the sailing mode during non-operation state of the speed control unit is selected. The roll mode above the maximum speed of sailing mode, during non-operation state of the speed control unit is selected. The electric starter is connected to the combustion engine in the stand mode and/or roll mode. An independent claim is included for drive system of motor car.

EP 1 201 479 discloses when an engine start request is made in order to use an engine as a drive power source during the running of the vehicle in an engine stopped state, the engine is cranked by a starter without supply of fuel to the engine, and the torque of the starter is controlled so that the engine revolution speed Ne becomes equal to the input shaft rotation speed Nin, that is, a synchronous rotation speed. After synchronization is achieved and the engagement of a clutch is completed, the fuel injection control of the engine is started to cause self-driven revolution based on explosion. The process reduces the consumption of fuel and the production of exhaust gas.

### SUMMARY OF THE INVENTION

In the meantime, a situation where a given condition for finishing coasting control is satisfied immediately after the given condition for starting the coasting control is satisfied may be considered. In this situation, it is desirable to promptly finish the coasting control, as compared with the case where the coasting control is finished after the coasting control is performed for a while. In the case where the coasting control is promptly finished, if the clutch is engaged after the engine speed and the transmission input rotational speed are matched or made equal to each other in a condition where the clutch is released, as described in JP 2012-30709 A, the clutch cannot be engaged while matching of the rotational speeds is performed, and the engaging time is prolonged. On the other hand, if the clutch is engaged without matching the rotational speeds, large shock may be generated when a rotational speed difference between the engine speed and the transmission input rotational speed is large.

The invention provides a vehicle, and a control method for the vehicle, which make it possible to promptly engage a clutch while suppressing shock, when coasting control is interrupted.

A first aspect of the invention is concerned with a vehicle as defined in claim 1.

With the above configuration, when the first condition is satisfied during traveling of the vehicle in which the clutch is engaged, the clutch is released by the clutch actuator, and the synchronization control for synchronizing the rotational speed of the engine with the input rotational speed of the transmission is performed. Then, when the first condition ceases to be satisfied during execution of the synchronization control, the clutch is engaged by the clutch actuator, and the synchronization control is finished. Therefore, when transition to the coasting control is interrupted, the clutch is engaged in a condition where a rotational speed difference between the engine speed and the transmission input rotational speed is small owing to the synchronization control. Thus, when coasting control is interrupted, it is possible to promptly engage the clutch while suppressing shock.

In the vehicle as described above, the electronic control unit may be configured to finish the synchronization control, and perform coasting control for traveling with the clutch released, when a predetermined time elapses from a point in time at which the first condition is satisfied.

With the above configuration, when the predetermined time elapses from the point in time at which the first condition is satisfied, the coasting control is appropriately carried out, and the fuel economy is improved.

In the vehicle as described above, the electronic control unit may be configured to finish the synchronization control, when the first condition does not cease to - be satisfied during execution of the synchronization control, and the predetermined time elapses from the point in time at which the first condition is satisfied.

With the above configuration, when the first condition does not cease to be satisfied during execution of the synchronization control, and the predetermined time elapses from the point in time at which the first condition is satisfied, the synchronization control is finished. Therefore, the coasting control is appropriately carried out, and the fuel economy is improved owing to the coasting control. Also, since the synchronization control is finished after the lapse of the predetermined time, energy consumption is suppressed or reduced.

In the vehicle as described above, the electronic control unit may be configured to perform one of control for stopping operation of the engine, and control for idling the engine, during execution of the coasting control.

With the above configuration, operation of the engine is stopped, or the engine is caused to run idle, while the coasting control is performed. Therefore, the fuel economy is improved owing to the coasting control.

The vehicle as described above may further include a motor coupled to a rotary shaft of the engine. The electronic control unit may be configured to perform one of a first control and second control as the synchronization control. The first control is a control for synchronizing the rotational speed of the engine with the input rotational speed of the transmission by controlling the engine. The second control is a control for synchronizing the rotational speed of the engine with the input rotational speed of the transmission by controlling the motor.

With the above configuration, the synchronization control is performed by either controlling the engine, or controlling the motor. Therefore, the amount of fuel supplied to the engine is reduced, as compared with synchronization control performed only by controlling the engine.

In the vehicle as described above, the electronic control unit may be configured to stop operation of the engine when the second control is performed.

With the above configuration, when the synchronization control is performed through control of the motor, operation of the engine is stopped; therefore, the amount of fuel supplied to the engine is reduced, as compared with the case where the synchronization control is performed through control of the engine.

The vehicle as described above may further include a power storage device configured to supply and receive electric power to and from the motor. The electronic control unit may be configured to perform the first control, when a charging capacity of the power storage device is equal to or smaller than a predetermined capacity.

With the above configuration, when the charging capacity of the power storage device is equal to or smaller than the predetermined capacity, the synchronization control is performed by controlling the engine; therefore, the synchronization control can be performed even in the case where the charging capacity of the power storage device is insufficient for driving of the motor.

In the vehicle as described above, the electronic control unit may be configured to start releasing the clutch after the synchronization control is started when the first condition is satisfied.

With the above configuration, when the first condition is satisfied, the clutch starts being released after the synchronization control is started; therefore, the engine speed and the transmission input rotational speed are kept substantially equal to each other, from a point in time prior to completion of release of the clutch.

The vehicle as described above may include an accelerator pedal, a brake pedal, and a clutch pedal. The first condition may be satisfied when none of the accelerator pedal, the brake pedal, and the clutch pedal is operated.

With the above configuration, the first condition includes a condition where none of the accelerator pedal, brake pedal, and the clutch pedal is operated. Therefore, when there is no pedal operation of the driver during traveling of the vehicle in which the clutch is engaged, the clutch is released, so that a power loss due to dragging of the engine can be reduced.

In the vehicle as described above, the electronic control unit may be configured to change an operating state of the clutch by the clutch actuator according to an amount of operation of the clutch pedal by a driver when the first condition ceases to be satisfied because of operation of the clutch pedal during execution of the synchronization control.

With the above configuration, when the first condition ceases to be satisfied because of operation of the clutch pedal, from a condition where the first condition is satisfied, the operating state of the clutch is changed according to the amount of operation of the clutch pedal by the driver. Therefore, a deviation between operation of the clutch pedal and the operating state of the clutch can be reduced.

In the vehicle as described above, the electronic control unit may be configured to engage the clutch by the clutch actuator, when the first condition ceases to be satisfied because of operation of at least one of the accelerator pedal and the brake pedal during execution of the synchronization control.

With the above configuration, when the first condition ceases to be satisfied because of operation of at least one of the accelerator pedal and the brake pedal, from a condition where the first condition is satisfied, the clutch is engaged. Therefore, the vehicle can promptly make a transition to accelerating traveling according to operation of the accelerator pedal or decelerating traveling according to operation of the brake pedal.

In the vehicle as described above, the electronic control unit may be configured to finish the synchronization control, after change of the operating state of the clutch is completed, when the first condition ceases to be satisfied during execution of the synchronization control.

With the above configuration, when the first condition ceases to be satisfied, from a condition where the first condition is satisfied, the synchronization control is finished after engagement of the clutch is completed. Therefore, the clutch is engaged during the synchronization control, and shock caused by engagement of the clutch can be suppressed.

A second aspect of the invention is concerned with a control method for a vehicle as defined in claim 11.

According to the control method as described above, when the first condition is satisfied during traveling of the vehicle in which the clutch is engaged, the clutch is released by the clutch actuator, and the synchronization control for synchronizing the rotational speed of the engine with the input rotational speed of the transmission is performed. Then, when the first condition ceases to be satisfied during execution of the synchronization control, the clutch is engaged by the clutch actuator, and the synchronization control is finished. Therefore, when transition to the coasting control is interrupted, the clutch is engaged in a condition where a rotational speed difference between the engine speed and the transmission input rotational speed is small owing to the synchronization control. Thus, when coasting control is interrupted, it is possible to promptly engage the clutch while suppressing shock.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view schematically showing the configuration of a vehicle to which the invention is applied, and is also a view useful for explaining control functions and a principal part of a control system for various controls in the vehicle;
FIG. 2 is a flowchart- illustrating a principal part of control operation of an electronic control unit, namely, control operation for promptly engaging a clutch while suppressing shock when coasting control is interrupted;
FIG. 3 shows one example of a time chart of the case where the control operation illustrated in the flowchart of FIG. 2 is performed;
FIG. 4 is a view schematically showing the configuration of a vehicle to which the invention is applied, and is also a view useful for explaining control functions and a principal part of a control system for various controls in the vehicle, according to an embodiment different from that of FIG. 1;
FIG. 5 is a flowchart, which is different from that of FIG. 2, illustrating a principal part of control operation of an electronic control unit, namely, control operation for promptly engaging a clutch while suppressing shock when coasting control is interrupted;
FIG. 6 shows one example of a time chart of the case where the control operation illustrated in the flowchart of FIG. 5 is performed; and
FIG. 7 is a flowchart, which is different from those of FIG. 2 and FIG. 5, illustrating a principal part of control operation of the electronic control unit, namely, control operation for promptly engaging the clutch while suppressing shock when coasting control is interrupted.

### DETAILED DESCRIPTION OF EMBODIMENTS

Some embodiments of the invention will be described in detail with reference to the drawings.

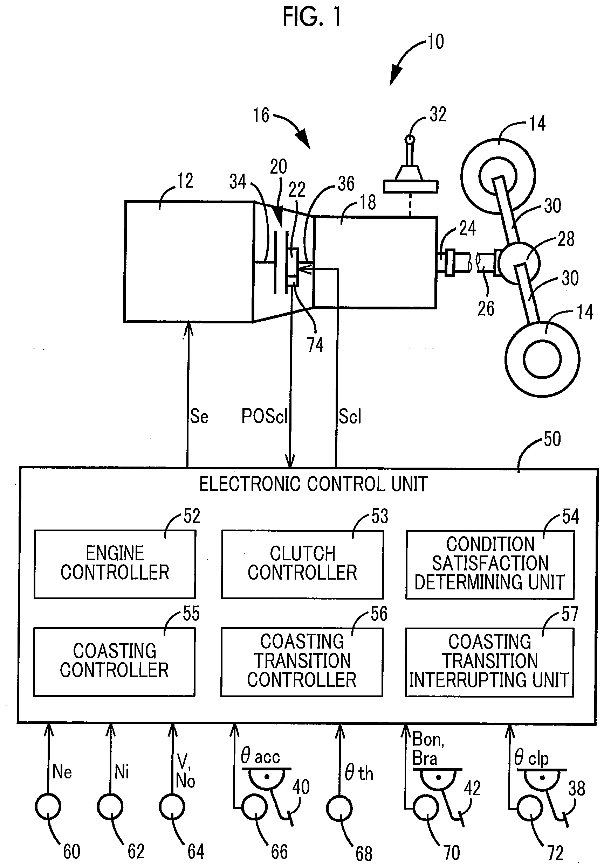

FIG. 1 schematically shows the configuration of a vehicle 10 to which this invention is applied, and also shows a principal part of a control system for various controls in the vehicle 10. In FIG. 1, the vehicle 10 includes an engine 12, drive wheels 14, and a vehicular power transmission system 16 (which will be called "power transmission system 16") provided on a power transmission path between the engine 12 and the drive wheels 14. The power transmission system 16 includes a transmission 18 that provides a part of the power transmission path between the engine 12 and the drive wheels 14, a clutch 20 that connects and disconnects a power transmission path between the engine 12 and the transmission 18, a clutch actuator 22 that switches the clutch 20 among an engaged state, slipping state, and a released state, a propeller shaft 26 coupled to a transmission output shaft 24 as an output rotating member of the transmission 18, a differential gear unit 28 coupled to the propeller shaft 26, a pair of axles 30 coupled to the differential gear unit 28, and so forth. In the power transmission system 16, power (synonymous with torque and force when they are not particularly distinguished) generated from the engine 12 is transmitted to the drive wheels 14, via the clutch 20, transmission 18, propeller shaft 26, differential gear unit 28, and the axles 30, in this order.

. The engine 12 is a driving power source of the vehicle 10, and is a known internal combustion engine, such as a gasoline engine or a diesel engine. Operating conditions, such as the intake air amount, fuel supply amount, and the ignition timing, of the engine 12 are controlled by an electronic control unit 50 that will be described later, so that engine torque Te is controlled.

The transmission 18 is a manual transmission of a known parallel-shaft, constant mesh type, which includes a plurality of pairs of speed change gears that constantly mesh with each other, between two shafts, for example. The transmission 18 is placed in a selected one of forward gear positions (e.g., forward five gear positions), reverse gear position (e.g., reverse one gear position), and a neutral position, through manual operation of a shift lever 32 provided in the vicinity of the driver's seat of the vehicle 10. Thus, the transmission 18 is a transmission whose gear position can be changed through manual operation.

The clutch 20 is a known dry type single plate clutch, for example, and a release sleeve (not shown) is moved when the clutch actuator 22 is driven by the electronic control unit 50 that will be described later. Then, an inner end portion of a diaphragm spring (not shown) is displaced, so that the operating state of the clutch 20 is changed. The clutch 20 is engaged in a condition where the release sleeve is not moved by the clutch actuator 22, so as to connect the power transmission path between the engine 12 and the transmission 18. On the other hand, if the release sleeve of the clutch 20 is moved by the clutch actuator 22, the release sleeve presses the inner end portion of the diaphragm spring. As a result, the bias force of the diaphragm spring is reduced, and the torque capacity of the clutch 20 is reduced. Then, if the position to which the release sleeve is moved (namely, the clutch position POScl) reaches a predetermined amount, the clutch 20 is released, and the power transmission path between the engine 12 and the transmission 18 is cut off (shut off). Thus, the operating state of the clutch 20 is switched by means of the clutch actuator 22, such that the power transmission path between the engine 12 and the transmission 18 can be connected and disconnected. The power transmission path extends between a crankshaft 34 of the engine 12 and a transmission input shaft 36 as an input rotating member of the transmission 18.

In the clutch 20, the clutch actuator 22 is driven by the electronic control unit 50 that will be described later, based on a clutch pedal operation amount θclp, i.e., an amount by which a clutch pedal 38 provided in the vicinity of the driver's seat of the vehicle 10 is depressed. As a result, the operating state of the clutch 20 can be changed. The clutch 20 is brought into the slipping state or released state when the clutch pedal 38 is depressed, and is brought into the engaged state when the clutch pedal 38 is released. Also, the operating state of the clutch 20 can be changed when the clutch actuator 22 is driven by the electronic control unit 50, irrespective of operation of the clutch pedal 38. For example, even if the clutch pedal 38 is not depressed, the clutch 20 can be brought into the slipping state or released state when the release sleeve is moved by the clutch actuator 22. The clutch actuator 22 is an electric or hydraulic actuator. The torque capacity of the clutch 20 is controlled, according to the position to which the release sleeve is moved (i.e., the clutch position POSc1), which position is changed through operation of the clutch actuator 22.

The vehicle 10 includes the electronic control unit 50 including a control device of the power transmission system 16 associated with switching control of the operating state of the clutch 20, for example. FIG. 1 shows an input/output system of the electronic control unit 50. FIG. 1 is also a functional block diagram useful for explaining a principal part of control functions performed by the electronic control unit 50. The electronic control unit 50 includes a so-called microcomputer including CPU, RAM, ROM, input and output interfaces, etc., for example. The CPU executes various controls of the vehicle 10, by performing signal processing according to programs stored in advance in the ROM while utilizing the temporary storage function of the RAM. For example, the electronic control unit 50 performs output control of the engine 12, switching control of the clutch 20, and so forth, and is configured to be divided into a subunit for engine output control, a subunit for clutch control, etc., as needed.

The electronic control unit 50 is supplied with various actual values based on detection signals obtained by various sensors included in the vehicle 10. The sensors include, for example, an engine speed sensor 60, input rotational speed sensor 62, output rotational speed sensor 64, accelerator pedal position sensor 66, throttle opening sensor 68, brake switch 70, shift position sensor 72, clutch position sensor 74, and so forth. The above-mentioned various actual values include, for example, the engine speed Ne, transmission input rotational speed Ni as the rotational speed of the transmission input shaft 36, transmission output rotational speed No as the rotational speed of the transmission output shaft 24, which corresponds to the vehicle speed V, accelerator pedal stroke θacc as the amount of driver's operation of an accelerator pedal 40 as an accelerating member provided in the vicinity of the driver's seat of the vehicle 10, throttle opening θth as the opening of an electronic throttle valve, brake-ON Bon as a signal indicating the brake operating state, i.e., driver's operation of a brake pedal 42 provided in the vicinity of the driver's seat of the vehicle 10 for actuating wheel brakes, brake operation amount Bra as the amount of operation (depression) of the brake pedal 42 depressed by the driver, clutch pedal operation amount θclp as the amount of operation (depression) of the clutch pedal 38 depressed by the driver, clutch position POSc1 as the position to which the clutch 20 is moved, and so forth. Also, the electronic control unit 50 outputs an engine output control command signal Se for output control of the engine 12, a clutch control command signal Sc1 for switching control of the operating state of the clutch 20, and so forth. The clutch control command signal Sc1, which is a command signal for moving the release sleeve that changes the operating state of the clutch 20 to a target clutch position POScl, is transmitted to the clutch actuator 22.

The electronic control unit 50 includes engine control means or engine controller 52, clutch control means or clutch controller 53, condition satisfaction determining means or condition satisfaction determining unit 54, and coasting control means or coasting controller 55, so as to implement control functions for various controls in the vehicle 10.

The engine controller 52 calculates a target throttle opening θthtgt by applying the accelerator pedal stroke θacc to a predetermined relationship (e.g., a throttle opening map) between the accelerator pedal stroke θacc and the throttle opening θth, which relationship is obtained in advance by experiment or through computations and stored. The engine controller 52 performs output control of the engine 12, by outputting an engine output control command signal Se for driving a throttle actuator so as to achieve the target throttle opening θthtgt, and operating a fuel injection system according to the intake air amount, etc.

The clutch controller 53 outputs a clutch control command signal Sc1 for changing the operating state of the clutch 20 by means of the clutch actuator 22. More specifically, the clutch controller 53 can change the operating state of the clutch 20 by means of the clutch actuator 22, based on operation of the clutch pedal 38. For example, the clutch controller 53 calculates a driver-requested torque capacity Tdrvreq of the clutch 20 corresponding to the clutch pedal operation amount θclp, by applying the clutch pedal operation amount θclp to a predetermined relationship (e.g., a requested torque capacity map) between the clutch pedal operation amount θclp and the driver-requested torque capacity Tdrvreq. The clutch controller 53 calculates the clutch position POSc1 at which the driver-requested torque capacity Tdrvreq is obtained, by applying the driver-requested torque capacity Tdrvreq to a predetermined relationship (e.g., a clutch characteristic map) between the clutch position POSc1 and the torque capacity Tc1 of the clutch 20. The clutch controller 53 outputs the clutch control command signal Sc1 for controlling the clutch position POSc1 to the clutch actuator 22, so as to achieve the clutch position POSc1 at which the driver-requested torque capacity Tdrvreq is obtained. Thus, the clutch controller 53 changes the operating state of the clutch 20 by means of the clutch actuator 22, so that the driver-requested torque capacity Tdrvreq of the clutch 20 according to driver's operation of the clutch pedal 38 can be obtained. Namely, the clutch controller 53 changes the operating state of the clutch 20 by means of the clutch actuator 22, so that the clutch 20 is placed in a selected one of the engaged state, slipping state, and the released state, according to the clutch pedal operation amount θclp.

The clutch controller 53 can also change the operating state of the clutch 20 by means of the clutch actuator 22, irrespective of operation of the clutch pedal 38. For example, if coasting control is performed by the coasting controller 55 when the clutch pedal 38 is in a released state and the clutch pedal operation amount θclp is equal to zero, the clutch controller 53 outputs a clutch control command signal Sc1 for controlling the clutch position POSc1 to the clutch actuator 22, so as to release the clutch 20.

The condition satisfaction determining, unit 54 determines whether predetermined start conditions for starting coasting control by the coasting controller 55 are satisfied, during traveling of the vehicle in which a certain gear position of the transmission 18 is formed and the clutch 20 is engaged. Also, the condition satisfaction determining unit 54 determines whether predetermined end conditions for finishing the coasting control are satisfied, during execution of the coasting control by the coasting controller 55. The coasting control is control for causing the vehicle 10 to travel while coasting with the clutch 20 released by the clutch actuator 22, when the vehicle 10 is placed in a traveling state in which an engine brake is applied during traveling with a certain gear position of the transmission 18 being formed.

If the condition satisfaction determining unit 54 determines that the predetermined start conditions are satisfied, while the vehicle is traveling such that a certain gear position of the transmission 18 is formed and the clutch 20 is engaged, the coasting controller 55 outputs a command for releasing the clutch 20 to the clutch controller 53, so as to execute the coasting control. On the other hand, if the condition satisfaction determining unit 54 determines that the predetermined end conditions are satisfied, during execution of the coasting control, the coasting controller 55 outputs a command for engaging the clutch 20 to the clutch controller 53, so as to finish execution of the coasting control. With the coasting control thus performed, the traveling distance during deceleration is increased, and the fuel economy is improved, as compared with the case where the engine brake is applied. During execution of the coasting control, the coasting controller 55 outputs a command for stopping operation of the engine 12 or idling the engine 12 at an idle speed, for example, to the engine controller 52. It is more advantageous to stop operation of the engine 12 during coasting control, in terms of improvement of the fuel economy. On the other hand, it is more advantageous to idle the engine 12 during coasting control, in that the engine speed Ne can be quickly raised when the coasting control is finished.

The predetermined start conditions denote a traveling state including a condition where none of the accelerator pedal 40, brake pedal 42, and the clutch pedal 38 is depressed and these pedals 38, 40, 42 are in the OFF states, for example. Namely, the predetermined start conditions denote a traveling state including a condition where the accelerator pedal stroke θacc is zero, a signal of brake-ON Bon is not generated, and the clutch pedal operation amount θclp is zero. On the other hand, the predetermined end conditions denote a traveling state that does not satisfy the predetermined start conditions, for example, a traveling state including a condition where at least one pedal of the accelerator pedal 40, brake pedal 42, and the clutch pedal 38 is depressed and is in the ON state. Namely, the predetermined end conditions denote a traveling state including a condition where at least one of accelerator pedal ON (or accelerator-ON) that means that the accelerator pedal stroke θacc is not equal to zero, generation of the signal of brake-ON Bon, and clutch pedal ON that means that the clutch pedal operation amount θclp is not equal to zero, is satisfied or established.

When execution of the coasting control is finished, the electronic control unit 50 increases the engine speed Ne so that the engine speed Ne becomes equal to the transmission input rotational speed Ni, and engages the clutch 20 by means of the clutch actuator 22 when a rotational speed difference ΔNc1(=|Ne-Ni|) between the engine speed Ne and the transmission input rotational speed Ni becomes smaller than a given rotational speed difference. When execution of the coasting control is-finished, the electronic control unit 50 may also control engagement of the clutch 20 so that the clutch 20 is engaged over a given engagement time. With this control, shock can be suppressed when execution of the coasting control is finished.

In the meantime, a situation where the accelerator pedal 40, or the like, is operated and the predetermined end conditions of the coasting control are satisfied, immediately after the predetermined start conditions of the coasting control are satisfied and the clutch 20 is released, may be considered. In this case of the driver's sudden re-operation, it is desirable for the vehicle to promptly return to normal traveling where coasting control is not performed. In the case where the vehicle is desired to promptly return to normal traveling, the clutch engagement time is prolonged if the clutch 20 is engaged after the rotational speed difference ΔNc1 becomes smaller than the given rotational speed difference as described above. On one hand, if the clutch 20 is rapidly engaged, shock may become large when the rotational speed difference ΔNc1 is large. On the other hand, it may be considered to start transition to the coasting control after a given time elapses from a point in time at which the OFF states of the respective pedals 38, 40, 42 are established, in expectation of (in preparation for) driver's sudden re-operation. In this case, an engine brake is once applied while the pedals 38, 40, 42 are in the OFF state, and the deceleration is reduced if the clutch 20 is released in a traveling state of the vehicle 10 in which the engine brake is applied; therefore, shock that fluctuates due to change of the deceleration may be generated.

In order to promptly engage the clutch 20 while suppressing shock against the driver's sudden re-operation, the electronic control unit 50 further includes coasting transition control means or coasting transition controller 56, and coasting transition interrupting means or coasting transition interrupting unit 57.

The condition satisfaction determining unit 54 determines whether a given first condition, as one of the predetermined start conditions, is satisfied, while the vehicle is traveling such that a certain gear position of the transmission 18 is formed and the clutch 20 is engaged. The condition satisfaction determining unit 54 also determines whether a given second condition, as one of the predetermined start conditions, is satisfied, during execution of synchronization control (that will be described later) by the coasting transition controller 56. The condition satisfaction determining unit 54 also determines whether a given interruption condition is satisfied, during execution of the synchronization control (that will be described later) by the coasting transition controller 56. The condition satisfaction determining unit 54 also determines whether the given interruption condition is satisfied because the clutch pedal 38 is operated. The condition satisfaction determining unit 54 also determines whether the given interruption condition is satisfied because at least one of the accelerator pedal 40 and the brake pedal 42 is operated.

The first condition, which is included in the predetermined start conditions, denotes a traveling state including a condition where all of the accelerator pedal 40, brake pedal 42, and the clutch pedal 38 are not depressed by the driver and are in the OFF states. The second condition, which is included in the predetermined start conditions, denotes a traveling state including a condition where a predetermined time has elapsed from a point in time at which the first condition was satisfied (namely, a point in time at which none of the above-indicated pedals 38, 40, 42 is depressed by the driver). Thus, the predetermined start conditions denote a traveling state including the condition where the predetermined time has elapsed from the point in time at which the first condition was satisfied, in addition to the condition where the accelerator pedal stroke θacc is zero, the signal of brake-ON Bon is not generated, and the clutch pedal operating amount θclp is zero. The predetermined time is a predetermined threshold value used for determining whether re-operation of any of the above-indicated pedals 38, 40, 42 by the driver is a sudden re-operation, for example. On the other hand, the given interruption condition denotes a traveling state in which the first condition is not satisfied, i.e., a traveling state including a condition where at least one of the accelerator pedal 40, brake pedal 42, and the clutch pedal 38 is depressed by the driver and is placed in the ON state. Accordingly, the case where the given interruption condition is satisfied is equivalent to the case where the first condition is not satisfied.

When the condition satisfaction determining unit 54 determines that the first condition is satisfied, while the vehicle is traveling such that a certain gear position of the transmission 18 is formed and the clutch 20 is engaged, the coasting transition controller 56 outputs a command for executing synchronization control to the engine controller 52 so as to perform the synchronization control, and outputs a command for releasing the clutch 20 by means of the clutch actuator 22 to the coasting controller 55. The synchronization control is control for synchronizing the engine speed Ne with the transmission input rotational speed Ni by controlling the engine 12, so that a synchronized state in which the engine speed Ne and the transmission input rotational speed Ni are equal to each other is maintained even in a condition where the clutch 20 is released. The coasting controller 55 outputs a command for releasing the clutch 20 to the clutch controller 53, and makes a transition to coasting control. The clutch controller 53 releases the clutch 20 by means of the clutch actuator 22. In the condition where the clutch 20 is released by the clutch controller 53, the engine controller 52 controls the engine 12 by driving the throttle actuator, and adjusting the amount of fuel supplied by the fuel injection system, for example, to thus perform the synchronization control for synchronizing the engine speed Ne with the transmission input rotational speed Ni. For example, the engine controller 52 calculates the throttle opening θth that makes the engine speed Ne equal to the transmission input rotational speed Ni in a condition where the clutch 20 is released (namely, a condition where the engine 12 runs at no load), using a known engine torque map. Then, the engine controller 52 performs the synchronization control, by driving the throttle actuator so as to achieve the calculated throttle opening θth, and driving the fuel injection system so as to achieve the fuel supply amount corresponding to the throttle opening θth. When the first condition is satisfied, the coasting transition controller 56 executes the synchronization control first, and starts releasing the clutch 20 while the synchronization control is continued (namely, while a command for executing the synchronization control is generated), so that the condition where the engine speed Ne is substantially equal to the transmission input rotational speed Ni is maintained when release of the clutch 20 is completed. The clutch controller 53 starts releasing the clutch 20 while the synchronization control continues to be performed by the engine controller 52. The engine controller 52 may operate the engine 12 through feedback control, so that the condition where the engine speed Ne is equal to the transmission input rotational speed Ni is maintained, in the process of releasing the clutch 20. While the synchronization control is intended to achieve a condition where the engine speed Ne is equal to (or coincides with) the transmission input rotational speed Ni, it may be allowed to result in a condition where the engine speed Ne and the transmission input rotational speed Ni do not completely coincide with each other (namely, a condition where there is some difference between the engine speed Ne and the transmission input rotational speed Ni).

When the condition satisfaction determining unit 54 determines that the given interruption condition is satisfied, during execution of the synchronization control by the coasting transition controller 56, the coasting transition interrupting unit 57 outputs a command for engaging the clutch 20 by means of the clutch actuator 22, to the coasting controller 55, and outputs a command for finishing the synchronization control to the coasting transition controller 56. Namely, if at least one of the above-indicated pedals 38, 40, 42 is depressed by the driver while the synchronization control is continued in a condition where the clutch 20 is released, the clutch 20 is engaged by the clutch controller 53, and the synchronization control performed by the engine controller 52 is finished. When the given interruption condition is satisfied, from a condition where the first condition is satisfied, the coasting transition interrupting unit 57 finishes the synchronization control, after engagement of the clutch 20 is completed, so that the clutch 20 is engaged in a condition where the engine speed Ne is substantially equal to the transmission input rotational speed Ni. The coasting controller 55 outputs a command for engaging the clutch 20 to the clutch controller 53, so as to interrupt transition to the coasting control. The coasting transition controller 56 outputs a command for interrupting execution of the synchronization control, to the engine controller 52. The engine controller 52 finishes the synchronization control, by driving the throttle actuator so as to achieve the target throttle opening θthtgt, and operating the fuel injection system according to the intake air amount.

When the transition to the coasting control is interrupted based on operation of the accelerator pedal 40 or operation of the brake pedal 42, it is desirable to-promptly engage the clutch 20. On the other hand, when the transition to the coasting control is interrupted based on operation of the clutch pedal 38, it is desirable to place the clutch 20 in an operating state corresponding to operation of the clutch pedal 38.

Therefore, when the condition satisfaction determining unit 54 determines that the given interruption condition is satisfied because of depression of the clutch pedal 38 by the driver, during execution of the synchronization control in the condition where the clutch 20 is released (namely, from a condition where the first condition is satisfied), the coasting transition interrupting unit 57 outputs a command for changing the operating state of the clutch 20 by means of the clutch actuator 22 according to the clutch pedal operation amount θclp, to the coasting controller 55. The coasting controller 55 outputs a command for changing the operating state of the clutch 20 according to the clutch pedal operation amount θclp, to the clutch controller 53, and interrupts transition to the coasting control. On the other hand, when the condition satisfaction determining unit 54 determines that the given interruption condition is satisfied because of depression of at least one of the accelerator pedal 40 and the brake pedal 42 by the driver, during execution of the synchronization control in the condition where the clutch 20 is released, the coasting transition interrupting unit 57 outputs a command for promptly engaging the clutch 20 by means of the clutch actuator 22, to the coasting controller 55. The coasting controller 55 outputs a command for promptly engaging the clutch 20 (namely, a command for rapidly engaging the clutch 20 at a given engaging speed), to the clutch controller 53, and interrupts transition to the coasting control.

When the condition satisfaction determining unit 54 does not determine that the given interruption condition is satisfied, but determines that the second condition is satisfied, during execution of the synchronization control by the coasting transition controller 56, the coasting controller 55 outputs a command for finishing the synchronization control to the coasting transition controller 56. Namely, when none of the pedals 38, 40, 42 is depressed by the driver, and the condition satisfaction determining unit 54 determines that the second condition is satisfied, during execution of the synchronization control in a condition where the clutch 20 is released, the coasting controller 55 outputs a command for finishing the synchronization control to the coasting transition controller 56. Further, the coasting controller 55 makes a transition to coasting control (namely, executes coasting control), by outputting a command for stopping operation of the engine 12 or idling the engine 12, to the engine controller 52. The coasting transition controller 56 outputs a command for interrupting (finishing) execution of the synchronization control, to the engine controller 52 that performs the synchronization control. The engine controller 52 stops operation of the engine 12 by stopping (shutting off) supply of the fuel by the fuel injection system, for example, or idles the engine 12 by driving the throttle actuator, or adjusting the amount of fuel supplied by the fuel injection system, so as to finish the synchronization control.

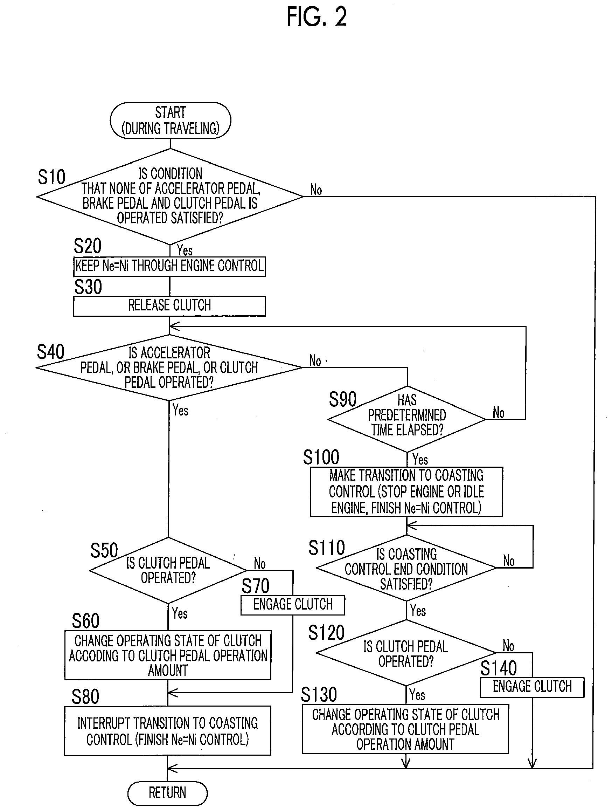

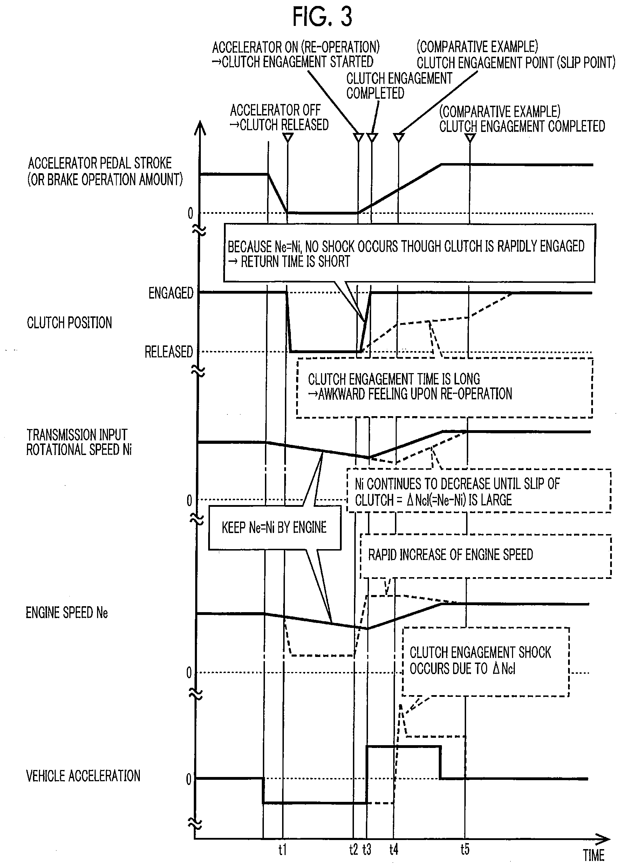

FIG. 2 is a flowchart illustrating a principal part of control operation of the electronic control unit 50, namely, control operation for promptly engaging the clutch 20 while suppressing shock when coasting control is interrupted. The control operation is repeatedly performed while the vehicle is traveling such that a certain gear position of the transmission 18 is formed and the clutch 20 is engaged, for example. FIG. 3 shows one example of a time chart of the case where the control operation illustrated in the flowchart of FIG. 2 is performed.

In FIG. 2, initially, in step S10 corresponding to a function of the condition satisfaction determining unit 54, it is determined whether the first condition (i.e., none of the accelerator pedal 40, brake pedal 42, and the clutch pedal 38 is operated) is satisfied. If a negative decision (NO) is obtained in step S10, the current cycle of the routine of FIG. 2 ends. If an affirmative decision (YES) is obtained in step S10, step S20 corresponding to a function of the coasting transition controller 56 is executed. In step S20, the engine 12 is controlled so that synchronization control for synchronizing the engine speed Ne with the transmission input rotational speed Ni is performed. Namely, the engine speed Ne is kept substantially equal to the transmission input rotational speed Ni, through control of the engine 12. Then, in step S30 corresponding to a function of the coasting transition controller 56, the clutch 20 is released by the clutch actuator 22. Then, in step S40 corresponding to a function of the condition satisfaction determining unit 54, it is determined whether the given interruption condition (i.e., the accelerator pedal 40, or the brake pedal 42, or the clutch pedal 38 is operated) is satisfied. If an affirmative decision (YES) is obtained in step S40, it is determined in step S50 corresponding to a function of the condition satisfaction determining unit 54 whether the given interruption condition is satisfied because of operation of the clutch pedal 38. If an affirmative decision (YES) is obtained in step S50, step S60 corresponding to a function of the coasting transition interrupting unit 57 is executed. In step S60, the operating state of the clutch 20 is changed by the clutch actuator 22, according to the clutch pedal operation amount θclp. If a negative decision (NO) is obtained in step S50, the clutch 20 is promptly engaged by the clutch actuator 22, in step S70 corresponding to a function of the coasting transition interrupting unit 57. After execution of step S60 or step S70, step S80 corresponding to functions of the coasting controller 55 and the coasting transition interrupting unit 57 is executed. In step S80, the synchronization control is finished, and the transition to the coasting control is interrupted. On the other hand, if a negative decision (NO) is obtained in the above step S40, it is determined in step S90 corresponding to a function of the condition satisfaction determining unit 54 whether the second condition (a lapse of the predetermined time from a point in time at which the first condition was satisfied) is satisfied. If a negative decision (NO) is obtained in step S90, the control returns to the above step S40. If an affirmative decision (YES) is obtained in step S90, step S100 corresponding to a function of the coasting controller 55 is executed. In step S100, the synchronization control is finished, and a transition to the coasting control is made by stopping operation of the engine 12 or idling the engine 12. Then, in step S110 corresponding to a function of the condition satisfaction determining unit 54, it is determined whether a given end condition for finishing the coasting control is satisfied. If a negative decision (NO) is obtained in step S110, step S110 is repeatedly executed. If an affirmative decision (YES) is obtained in step S110, it is determined in step S120 corresponding to a function of the condition satisfaction determining unit 54 whether the given end condition is satisfied since the clutch pedal 38 is operated. If an affirmative decision (YES) is obtained in step S120, step S130 corresponding to a function of the coasting controller 55 is executed, in which the operating state of the clutch 20 is changed by the clutch actuator 22 according to the clutch pedal operation amount θclp. If a negative decision (NO) is obtained in step S120, step S140 corresponding to a function of the coasting controller 55 is executed, in which the clutch 20 is promptly engaged by the clutch actuator 22.

In FIG. 3, time t1 indicates a point in time at which the first condition (i.e., none of the accelerator pedal 40, brake pedal 42, and the clutch pedal 38 is operated) is satisfied, and release of the clutch 20 is started, for start of a transition to coasting control. At time t2, the clutch 20 starts being engaged because re-operation of accelerator ON is performed (i.e., the accelerator pedal 40 is depressed again), and the transition to the coasting control is interrupted. In a comparative example indicated by broken lines, the synchronization control is not performed during transition to the coasting control; therefore, the engine speed Ne is reduced toward the idle speed (see time t1 to time t2). Accordingly, in the comparative example, the engine speed Ne is increased when the transition to the coasting control is interrupted (see time t2 and later). At this time, racing of the engine, or a sharp rise in the engine speed Ne, takes place, and the transmission input rotational speed Ni continues to decrease until the clutch 20 is caused to slip, so that the rotational speed difference ΔNc1 is increased (see time t2 to time t4). Therefore, the engagement time of the clutch 20 is prolonged, and engagement shock of the clutch 20 occurs due to the increase of the rotational speed difference ΔNc1 (see time t2 to time t5). On the other hand, in this embodiment indicated by solid lines, the synchronization control is performed when the clutch 20 is released upon transition to the coasting control, and the engine speed Ne is kept substantially equal to the transmission input rotational speed Ni through control of the engine 12 (see time t1 to time t3). Accordingly, in this embodiment, the engine speed Ne is substantially equal to the transmission input rotational speed Ni at time t2, and there is no shock, or shock is suppressed, even if the clutch 20 is rapidly engaged when the transition to the coasting control is interrupted. Thus, engagement of the clutch 20 is completed at time t3, and the time required to return to normal traveling where coasting control is not performed is shortened (see time t2 to time t3).

As described above, according to this embodiment, when the first condition is satisfied during traveling of the vehicle 10 in which the clutch 20 is engaged, the clutch 20 is released by the clutch actuator 22, and the synchronization control for synchronizing the engine speed Ne with the transmission input rotational speed Ni is performed through control of the engine 12. Then, when the first condition ceases to be satisfied during execution of the synchronization control, the clutch 20 is engaged by the clutch actuator 22, and the synchronization control is finished. Therefore, when the transition to the coasting control is interrupted, the clutch 20 is engaged in a condition where the rotational speed difference ΔNc1 (=|Ne-Ni|) is small owing to the synchronization control. Thus, when the coasting control is interrupted, the clutch 20 can be promptly engaged while shock is suppressed.

Also, according to this embodiment, when the predetermined time has elapsed from the time when the first condition was satisfied, the coasting control is appropriately performed, and the fuel economy is improved.

Also, according to this embodiment, when the first condition does not cease to be satisfied during execution of the synchronization control, and the predetermined time has elapsed from the time when the first condition was satisfied, the synchronization control is finished, and the coasting control is appropriately performed, so that the fuel economy is improved through the coasting control. Also, since the synchronization control through control of the engine 12 is finished after the lapse of the predetermined time, consumption of the fuel is suppressed or reduced.

Also, according to this embodiment, operation of the engine 12 is stopped or the engine 12 runs idle, while the coasting control is performed; therefore, the fuel economy is improved owing to the coasting control.

Also, according to this embodiment, when the first condition is satisfied, the clutch 20 starts being released during execution of the synchronization control; therefore, the engine speed Ne and the transmission input rotational speed Ni are kept substantially equal to each other, before release of the clutch 20 is completed.

Also, according to this embodiment, the first condition includes a condition where none of the accelerator pedal 40, brake pedal 42, and the clutch pedal 38 is operated. Thus, when no pedal operation is performed by the driver during traveling of the vehicle in which the clutch 20 is engaged, the clutch 20 is released; therefore, a power loss due to dragging of the engine 12 can be curbed or reduced.

Also, according to this embodiment, the case where the first condition ceases to be satisfied includes a condition where at least one of the accelerator pedal 40, brake pedal 42, and the clutch pedal 38 is operated. Therefore, the clutch 20 can be quickly brought into an engaged state, according to the pedal operation by the driver.

Also, according to this embodiment, when the first condition creases to be satisfied during execution of synchronization control, the clutch 20 is appropriately engaged, and the synchronization control is appropriately finished.

Also, according to this embodiment, when the first condition ceases to be satisfied because the clutch pedal 38 is operated from a condition where the first condition is satisfied, the operating state of the clutch 20 is changed according to the clutch pedal operation amount θclp. Therefore, a deviation between operation of the clutch pedal 38 and the operating state (degree of engagement) of the clutch 20 can be reduced.

Also, according to this embodiment, when the first condition ceases to be satisfied because at least one of the accelerator pedal 40 and the brake pedal 42 is operated from a condition where the first condition is satisfied, the clutch 20 is promptly engaged. Therefore, the vehicle can make a quick transition to accelerating traveling according to operation of the accelerator pedal 40 or decelerating traveling according to operation of the brake pedal 42.

Also, according to this embodiment, when the first condition ceases to be satisfied from a condition where the first condition is satisfied, the synchronization control is finished after engagement of the clutch 20 is completed. Therefore, the clutch 20 is engaged during the synchronization control (namely, the clutch 20 is engaged in a condition where the engine speed Ne is substantially equal to the transmission input rotational speed Ni), and shock caused by engagement of the clutch 20 can be suppressed.

Also, according to this embodiment, the clutch 20 can be promptly released after the-first condition (i.e., none of the accelerator pedal 40, brake pedal 42, and the clutch pedal 38 is operated) is satisfied. Therefore, it is possible to avoid occurrence of shock due to change of the deceleration, which would be a problem encountered in control under which transition to the coasting control is started after a lapse of a predetermined time after the first condition is satisfied, in preparation for sudden re-operation by the driver.

Next, another embodiment of the invention will be described. In the following description, the same reference numerals are assigned to portions or components common to the embodiments, of which explanation will not be provided.

While the synchronization control is performed through control of the engine 12 in the above-described first embodiment, synchronization control is performed through control of an electric motor MG in this embodiment. To this end, a vehicle 80 of this embodiment includes the electric motor MG coupled to the crankshaft 34 as a rotary shaft of the engine 12.

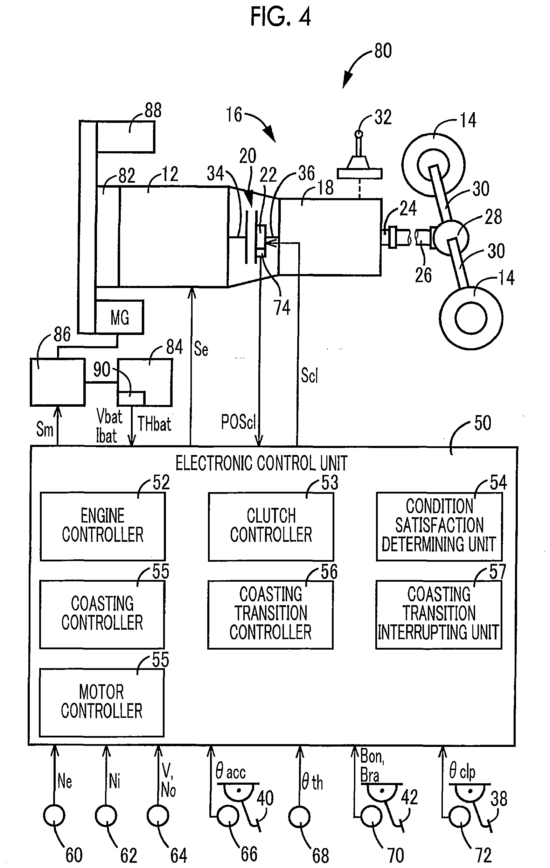

FIG. 4 schematically shows the configuration of the vehicle 80 to which this invention is applied, and also shows a principal part of a control system for various controls in the vehicle 80. In FIG. 4, the vehicle 80 further includes the electric motor MG, a battery 84, an inverter 86, and accessories, such as a compressor 88 for an air conditioner, as compared with the vehicle 10 of the above-described first embodiment. The motor MG is operatively coupled to the engine 12 via an electromagnetic clutch 82 coupled to the crankshaft 34 of the engine 12. The battery 84, which serves as a power storage device, supplies and receives electric power to and from the motor MG. The inverter 86 controls electric power supplied from the battery 84 to the motor MG, and controls electric power supplied (charged) into the battery 84. Like the motor MG, the accessories are operatively coupled to the engine 12 via the electromagnetic clutch 82.

The motor MG is a so-called motor-generator that functions as a motor for generating drive torque, and also functions as a generator. With the inverter 86 controlled by the electronic control unit 50, MG torque Tmg as output torque (motoring torque or regenerative torque) of the motor MG is controlled. The motor MG also functions as an engine starting device for starting the engine 12.

As compared with the vehicle 10 of the above-described first embodiment, the electronic control unit 50 is further supplied with various actual values based on detection signals obtained by a battery sensor 90 included in the vehicle 80. The actual values based on the detection signals obtained by the battery sensor 90 include, for example, the battery temperature THbat as the temperature of the battery 84, battery charge/discharge current Ibat as input/output current of the battery 84, and the battery voltage Vbat as the voltage of the battery 84. Also, a motor control command signal Sm for output control of the motor MG is further generated from the electronic control unit 50. The electronic control unit 50 calculates the state of charge (charging capacity) SOC of the battery 84, based on the battery temperature THbat, battery charge/discharge current Ibat, and the battery voltage Vbat, for example.

As compared with the vehicle 10 of the above-described first embodiment, the electronic control unit 50 further includes motor control means or motor controller 58 for implementing control functions for various controls in the vehicle 10. When the engine 12 is started, the motor controller 58 outputs a motor control command signal Sm for causing the motor MG to generate power for rotating/driving the engine 12, to the inverter 86. When the vehicle 80 travels while being decelerated, the motor controller 58 outputs a motor control command signal Sm for causing the motor MG to generate electric power when rotated/driven by the crankshaft 34, to the inverter 86.

When the condition satisfaction determining unit 54 determines that the first condition is satisfied, during traveling of the vehicle 80 in which a certain gear position of the transmission 18 is formed and the clutch 20 is engaged, the coasting transition controller 56 outputs a command for executing synchronization control to the motor controller 58, and performs the synchronization control. Further, the coasting transition controller 56 outputs a command for stopping operation of the engine 12 to the engine controller 52, and outputs a command for releasing the clutch 20 by means of the clutch actuator 22 to the coasting controller 55. Unlike the above-described first embodiment, the synchronization control is control for synchronizing the engine speed Ne with the transmission input rotational speed Ni through control of the motor MG, so that the engine speed Ne and the transmission input rotational speed Ni are kept in a synchronized state (i.e., kept equal to each other) even in a condition where the clutch 20 is released and operation of the engine 12 is stopped. The coasting controller 55 outputs a command for releasing the clutch 20 to the clutch controller 53, to thus make a transition to coasting control. The clutch controller 53 releases the clutch 20 by means of the clutch actuator 22. The motor controller 58 outputs a motor control command signal Sm for driving the motor MG so as to synchronize the engine speed Ne with the transmission input rotational speed Ni, in a condition where the clutch 20 is released by the clutch controller 53, to the inverter 86. With the motor MG thus controlled, the synchronization control for synchronizing the engine speed Ne the transmission input rotational speed Ni is performed. For example, the motor controller 58 performs the synchronization control, by calculating motor drive current that synchronizes the engine speed Ne (=motor speed Nm) with the transmission input rotational speed Ni in a condition where the clutch 20 is released and operation of the engine 12 is stopped, using a known motor torque map, and driving the inverter 86 so as to provide the motor drive current. When the first condition is satisfied, the coasting transition controller 56 performs the synchronization control first, and starts releasing the clutch 20 during execution of the synchronization control, so that the engine speed Ne and the transmission input rotational speed Ni are kept substantially equal to each other when release of the clutch 20 is completed. Then, the coasting transition controller 56 starts release of the clutch 20 while the synchronization control is being performed. The clutch controller 53 starts releasing the clutch 20 while the synchronization control is being performed by the motor controller 58. Also, the coasting transition controller 56 performs the synchronization control first, and stops operation of the engine 12 while the synchronization control is being performed, so that the engine speed Ne and the transmission input rotational speed Ni are kept substantially equal to each other when operation of the engine 12 is stopped. The engine controller 52 stops operation of the engine 12, by stopping (shutting off) supply of the fuel by the fuel injection system. The motor controller 58 may operate the motor MG under feedback control, so that the engine speed Ne and the transmission input rotational speed Ni are kept equal to each other, in the process of releasing the clutch 20.

When the condition satisfaction determining unit 54 determines that the given interruption condition is satisfied, during execution of the synchronization control by the coasting transition controller 56, the coasting transition interrupting unit 57 outputs a command for engaging the clutch 20 by means of the clutch actuator 22, to the coasting controller 55. Unlike the above-described first embodiment, the coasting transition interrupting unit 57 further outputs a command for re-starting the engine 12 to the engine controller 52, and outputs a command for finishing the synchronization control to the coasting transition controller 56. Namely, when at least one of the above-indicated pedals 38, 40, 42 is depressed by the driver while the synchronization control is being performed in a condition where the clutch 20 is released, the clutch 20 is engaged by the clutch controller 53. In addition, the engine 12 is re-started, and the synchronization control performed by the motor controller 58 is finished. When the given interruption condition is satisfied from the condition where the first condition is satisfied, the coasting transition interrupting unit 57 finishes the synchronization control, after completing engagement of the clutch 20, so that the clutch 20 is engaged in a condition where the engine speed Ne and the transmission input rotational speed Ni are substantially equal to each other. Since the engine speed Ne is kept substantially equal (or equal) to the transmission input rotational speed Ni, through execution of the synchronization control, or completion of engagement of the clutch 20, the engine 12 may be started after the synchronization control is finished. However, in view of the case where the accelerator pedal is depressed (accelerator-ON) or a large engine brake is undesirably applied, it is preferable to promptly re-start supply of the fuel to the engine 12 and start the engine 12. The coasting controller 55 outputs a command for engaging the clutch 20 to the clutch controller 53, to thus interrupt transition to the coasting control. The engine controller 52 re-starts the engine 12 by re-starting supply of the fuel by the fuel injection system, for example. The coasting transition controller 56 outputs a command for interrupting execution of the synchronization control to the motor controller 58. The motor controller 58 finishes the synchronization control, by outputting a motor control command signal Sm for operating the motor MG at no load, to the inverter 86. The engine controller 52 performs output control of the engine 12, by driving the throttle actuator so as to provide a target throttle opening θthtgt, or operating the fuel injection system according to the intake air amount, in accordance with interruption of execution of the synchronization control.

When the condition satisfaction determining unit 54 does not determine that the given interruption condition is satisfied, but determines that the second condition is satisfied, during execution of the synchronization control by the coasting transition controller 56, the coasting controller 55 outputs a command for finishing the synchronization control to the coasting transition controller 56. Further, the coasting controller 55 outputs a command for keeping operation of the engine 12 stopped or idling the engine 12, to the engine controller 52, thereby to make a transition to the coasting control (namely, execute the coasting control). The coasting transition controller 56 outputs a command for interrupting (finishing) execution of the synchronization control, to the motor controller 58 that performs the synchronization control. The motor controller 58 outputs a motor control command signal Sm for operating the motor MG at no load, to the inverter 86, so as to finish the synchronization control. The engine controller 52 continues to stop operation of the engine 12, or idles the engine 12 by driving the throttle actuator, or adjusting the amount of fuel supplied by the fuel injection system, for example.

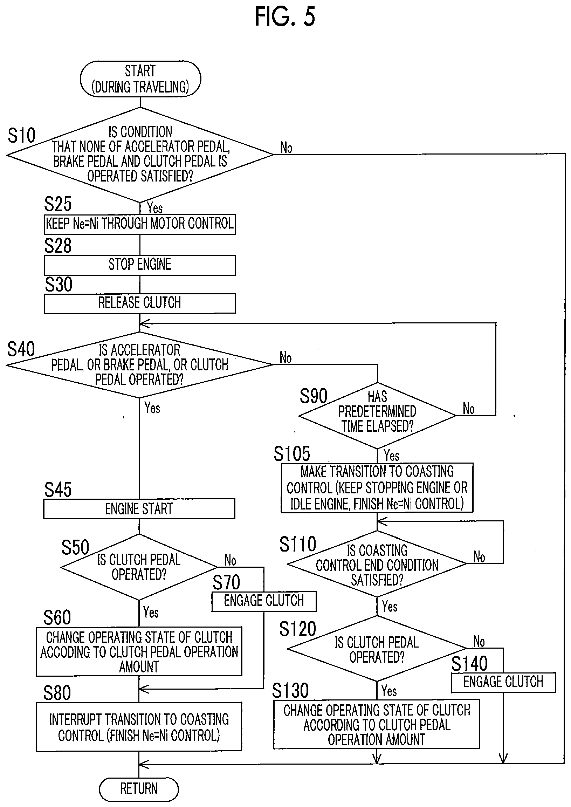

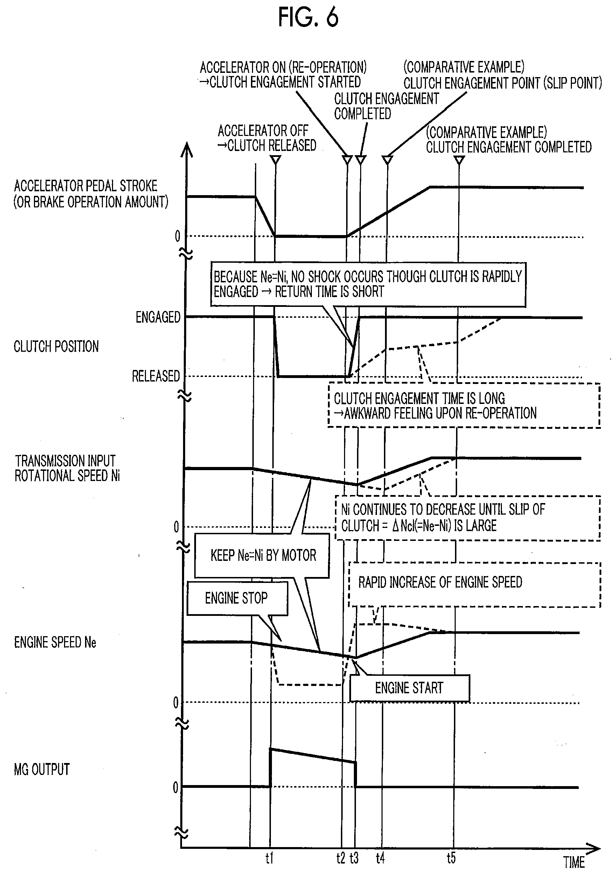

FIG. 5 is a flowchart illustrating a principal part of control operation of the electronic control unit 50, namely, control operation for promptly engaging the clutch 20 while suppressing shock when the coasting control is interrupted. The control operation is repeatedly performed during traveling of the vehicle 80 in which a certain gear position of the transmission 18 is formed and the clutch 20 is engaged. The flowchart of FIG. 5 is different from that of FIG. 2. FIG. 6 shows one example of a time chart of the case where the control operation illustrated in the flowchart of FIG. 5 is carried out.

The flowchart of FIG. 5 is mainly different from that of FIG. 2 in that step S25 and step S28 are provided in place of step S20 of FIG. 2, step S45 is newly provided, and step S105 is provided in place of step S100 of FIG. 2. In explanation of FIG. 5, the differences from the flowchart of FIG. 2 will be mainly described.

In FIG. 5, the above step S10 is initially executed. If a negative decision (NO) is obtained in step S10, the current cycle of this routine ends. If an affirmative decision (YES) is obtained in step S10, step S25 corresponding to a function of the coasting transition controller 56 is executed, in which synchronization control for synchronizing the engine speed Ne with the transmission input rotational speed Ni by controlling the motor MG is performed. Namely, the engine speed Ne is kept substantially equal to the transmission input rotational speed Ni through control of the motor MG. Then, in step S28 corresponding to a function of the coasting transition controller 56, operation of the engine 12 is stopped. Then, the above step S30 is executed, and the above step S40 is then executed. If an affirmative decision (YES) is obtained in step S40, the engine 12 is re-started in step S45 corresponding to a function of the coasting transition interrupting unit 57. Then, the above step S50 is executed, and the above step S60 is executed if an affirmative decision (YES) is obtained in step S50, while the above step S70 is executed if a negative decision (NO) is obtained in step S50. After execution of step S60 or step S70, the above step S80 is executed. On the other hand, if a negative decision (NO) is obtained in step S40, the above step S90 is executed. If a negative decision (NO) is obtained in step S90, the control returns to step S40. If an affirmative decision (YES) is obtained in step S90, the synchronization control is finished in step S105 corresponding to a function of the coasting controller 55. Then, operation of the engine 12 is kept stopped, or the engine 12 is caused to run idle, so that a transition to the coasting control is made. Then, the above step S110 is executed. If a negative decision (NO) is obtained in step S110, step S110 is repeatedly executed. If an affirmative decision (YES) is obtained in step S110, the above step S120 is executed. If an affirmative decision (YES) is obtained in step S120, the above step S130 is executed. If a negative decision (NO) is obtained in step S120, the above step S140 is executed.

In the time chart of FIG. 6, in this embodiment indicated by solid lines, when the clutch 20 is released at the time of transition to coasting control, synchronization control is performed using the motor MG. The time chart of FIG. 6 is mainly different from the time chart of FIG. 3 in that the engine speed Ne is kept substantially equal to the transmission input rotational speed Ni through control of the motor MG (see time t1 to time t3). Since the synchronization control is performed using the motor MG, operation of the engine 12 is stopped (see time t1 to time t2) until the clutch 20 starts being engaged in response to re-operation of the accelerator pedal (accelerator-ON). Also, the engine 12 is re-started (see time t2 to time t3), during a period from start of engagement of the clutch 20 in response to re-operation of the accelerator pedal (accelerator-ON), to completion of engagement of the clutch 20.

As described above, according to this embodiment, if the first condition is satisfied during traveling of the vehicle 80 in which the clutch 20 is engaged, the clutch 20 is released by the clutch actuator 22. Further, in this embodiment, the synchronization control for synchronizing the engine speed Ne with the transmission input rotational speed Ni by controlling the motor MG is performed, and operation of the engine 12 is stopped. Then, in this embodiment, if the first condition ceases to be satisfied during execution of the synchronization control, the clutch 20 is engaged by the clutch actuator 22, and the engine 12 is re-started, while the synchronization control is finished. Therefore, when the transition to the coasting control is interrupted, the clutch 20 is engaged in a condition where the rotational speed difference ΔNc1 (=|Ne-Ni|) is small owing to the synchronization control. Thus, when the coasting control is interrupted, it is possible to promptly engage the clutch 20 while suppressing shock. Also, the synchronization control of this embodiment is performed by controlling the motor MG, and operation of the engine 12 is stopped during the synchronization control. Therefore, the amount of fuel supplied to the engine 12 is reduced, as compared with the case where the synchronization control is performed by controlling the engine 12.

Also, in this embodiment, if the first condition does not cease to be satisfied during execution of the synchronization control, and a predetermined time elapses from a point in time at which the first condition was satisfied, the synchronization control is finished, and operation of the engine 12 is kept stopped or the engine 12 is caused to run idle, so that the coasting control is performed. Therefore, the fuel economy is improved through the coasting control. Also, the synchronization control involving control of the motor MG is finished after a lapse of the predetermined time, and consumption of electric power is suppressed.

In the above-described second embodiment, the synchronization control is performed through control of the motor MG. If the charging capacity SOC is reduced to such an extent that the battery 84 is excessively discharged when the motor MG is driven, it is preferable not to perform synchronization control through control of the motor MG. In a third embodiment, when the charging capacity SOC of the battery 84 is low, the synchronization control involving control of the motor MG is not performed, but synchronization control involving control of the engine 12 is performed, in additional steps as compared with the above-described second embodiment.

More specifically, the motor controller 58 determines whether the charging capacity SOC of the battery 84 exceeds a predetermined capacity. The predetermined capacity is a predetermined threshold value based on which it is determined that the charging capacity SOC is at such a level that the battery 84 is not excessively discharged even if the synchronization control is performed by means of the motor MG.

When the condition satisfaction determining unit 54 determines that the first condition is satisfied, during traveling of the vehicle in which a certain gear position of the transmission 18 is formed and the clutch 20 is engaged, the coasting transition controller 56 outputs a command for executing synchronization control for synchronizing the engine speed Ne with the transmission input rotational speed Ni by controlling the motor MG, to the motor controller 58, if the motor controller 58 determines that the charging capacity SOC of the battery 84 exceeds the predetermined capacity, in an additional step as compared with the above-described second embodiment. Further, the coasting transition controller 56 outputs a command for stopping operation of the engine 12 to the engine controller 52, and outputs a command for releasing the clutch 20 by means of the clutch actuator 22 to the coasting controller 55. In addition, when the motor controller 58 determines that the charging capacity SOC of the battery 84 is equal to or smaller than the predetermined capacity, the coasting transition controller 56 outputs a command for executing synchronization control for synchronizing the engine speed Ne with the transmission input rotational speed Ni by controlling the engine 12, to the engine controller 52, in place of the synchronization control involving control of the motor MG (namely, synchronization control - performed by the motor controller 58) and stop of operation of the engine 12 by the engine controller 52.

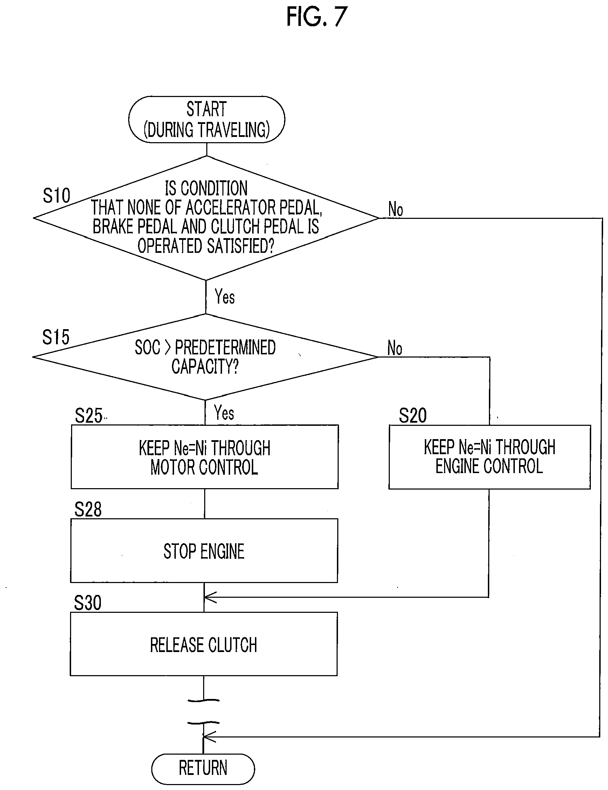

FIG. 7 is a flowchart illustrating a principal part of control operation of the electronic control unit 50, namely, control operation for promptly engaging the clutch 20 while suppressing shock when coasting control is interrupted. The control operation of FIG. 7 is repeatedly performed during traveling of the vehicle in which a certain gear position of the transmission 18 is formed and the clutch 20 is engaged. The flowchart of FIG. 7 is different from the flowcharts of FIG. 2 and FIG. 5.

The flowchart of FIG. 7 is mainly different from the flowchart of FIG. 5 in that steps S15 and S20 are newly provided. The flowchart of FIG. 7 is mainly different from the flowchart of FIG. 2 in that steps S15, S25, and S28 are newly provided. While step S40 and subsequent steps are not illustrated in the flowchart of FIG. 7, step S40 and subsequent steps as illustrated in the flowcharts of FIG. 2 and FIG. 5 are executed following step S30. In explanation of FIG. 7, the differences from the flowcharts of FIG. 2 and FIG. 5 will be mainly described.

In FIG. 7, the above step S10 is initially executed. If a negative decision (NO) is obtained in step S10, the current cycle of this routine ends. If an affirmative decision (YES) is obtained in step S10, it is determined in step S15 corresponding to a function of the motor controller 58 whether the charging capacity SOC of the battery 84 exceeds a predetermined capacity. If a negative decision (NO) is obtained in step S15, step S20 corresponding to a function of the coasting transition controller 56 is executed, in which synchronization control for synchronizing the engine speed Ne with the transmission input rotational speed Ni by controlling the engine 12 is performed. Namely, the engine speed Ne is kept substantially equal to the transmission input rotational speed Ni through control of the engine 12. On the other hand, if an affirmative decision (YES) is obtained in step S15, step S25 corresponding to a function of the coasting transition controller 56 is executed, in which synchronization control for synchronizing the engine speed Ne with the transmission input rotational speed Ni by controlling the motor MG is performed. Namely, the engine speed Ne is kept substantially equal to the transmission input rotational speed Ni through control of the motor MG. Then, in step S28 corresponding to a function of the coasting transition controller 56, operation of the engine 12 is-stopped. After execution of the above step S20 or the above step S28, the above step S30 and subsequent steps are executed. In step S30 and subsequent steps, step S30 and subsequent steps in the flowchart of FIG. 2 are executed when the above step S20 is executed, and step S30 and subsequent steps in the flowchart of FIG. 5 are executed when the above steps S25, S28 are executed.

As described above, according to this embodiment, when the charging capacity SOC of the battery 84 exceeds the predetermined capacity, the synchronization control is performed through control of the motor MG, and operation of the engine 12 is stopped. Therefore, the amount of fuel supplied to the engine 12 is reduced, as compared with the case where the synchronization control is performed through control of the engine 12. On the other hand, when the charging capacity SOC of the battery 84 is equal to or smaller than the predetermined capacity, the synchronization control is performed through control of the engine 12, in place of the synchronization control involving control of the motor MG. Therefore, the synchronization control can be performed even when the charging capacity SOC of the battery 84 is insufficient for driving of the motor MG.

While the embodiments of the invention have been described in detail with reference to the drawings, the invention may be applied in other forms.

While the synchronization control for synchronizing the engine speed Ne with the transmission input rotational speed Ni is performed through control of the engine 12 in the above-described first embodiment, the invention is not limited to this mode of control. For example, the synchronization control may be performed through control of the engine 12 by the engine controller 52, and control of the motor MG by the motor controller 58. Namely, the coasting transition controller 56 may output a command for executing synchronization control by controlling the engine 12 and controlling the motor MG, to the engine controller 52 and the motor controller 58. In this case, in step S20 of FIG. 2, synchronization control for synchronizing the engine speed Ne with the transmission input rotational speed Ni is performed by controlling the engine 12 and controlling the motor MG. Namely, the engine speed Ne is kept substantially equal to the transmission input rotational speed Ni through control of the engine 12 and control of the motor MG. For example, the engine controller 52 drives the engine 12 to such an extent as to idle the engine 12, and the motor controller 58 causes the motor MG to generate power large enough to increase the engine speed Ne from the idle speed to the transmission input rotational speed Ni. Since the synchronization control is performed by controlling the engine 12, and controlling the motor MG, the amount of fuel supplied to the engine 12 is reduced, as compared with the synchronization control involving only control of the engine 12.

The mode of control in which the synchronization control is performed using both the engine 12 and the motor MG as described above may be applied to the above-described third embodiment. In the above-described third embodiment, the synchronization control is performed through control of the engine 12 when the charging capacity SOC of the battery 84 is equal to or smaller than the predetermined capacity. However, the synchronization control may be performing using both the engine 12 and the motor MG, such that the motor MG is driven within a range in which reduction of the charging capacity SOC is permitted.

Also, in the above-described embodiments, the engine controller 52 (and/or the motor controller 58), clutch controller 53, and the coasting controller 55 may directly perform control in the process of transition to coasting, and control for interrupting the control in the process of transition to coasting, and the electronic control unit 50 may not necessarily include the coasting transition controller 56 and the coasting transition interrupting unit 57.

In the above-described embodiments, the first condition is a traveling state including a condition where none of the accelerator pedal 40, brake pedal 42, and the clutch pedal 38 is depressed, and these pedals 38, 40, 42 are in the OFF states. However, the invention is not limited to this definition of the first condition. For example, the first condition may be a traveling state including a condition where the vehicle speed V is within a predetermined range, a condition where the transmission 18 is placed in a predetermined gear position, a condition where the vehicle is traveling on a flat road, or a condition where the vehicle is traveling on an uphill or downhill having a given gradient or smaller, in addition to the condition where the pedals 38, 40, 42 are in the OFF states. Similarly, the above-mentioned given start conditions including the second condition, given end conditions, or given interruption conditions are also not limited to those of the above-described embodiments.

While the clutch pedal 38 is provided in the above-described embodiments, the invention is not limited to this arrangement. For example, the shift lever 32 may be provided with a switch, and the gear position of the transmission 18 may be changed when the driver operates the shift lever 32 while pressing the switch. In this case, the clutch pedal 38 may not be provided, and the clutch 20 may be actuated or operated by the clutch actuator 22 when pressing of the switch is detected.

While the transmission 18 is a manual transmission of a known parallel-shaft, constant mesh type in the above-described embodiments, the invention is not limited to this arrangement. For example, the transmission may be a transmission of a known parallel-shaft, constant mesh type, in which engagement and release of a mesh type clutch(es) are controlled by an actuator(s) so that the gear position is changed, or a known DCT (Dual Clutch Transmission) as one type of the transmission of known parallel-shaft constant mesh type, which has two systems having input shafts, or a known planetary gear type automatic transmission, or a continuously variable transmission. In a vehicular power transmission system including any of these types of transmissions, a clutch that connects and disconnects a power transmission path between the engine and the transmission (or drive wheels) is provided. For example, in a vehicular power transmission system including a continuously variable transmission, an engagement device provided in a known forward/reverse drive switching device functions as the clutch. In the vehicular power transmission system including this type of transmission, the clutch pedal 38 is not provided. In sum, the invention may be applied to any type of vehicular power transmission system provided that it includes a clutch that connects and disconnects a power transmission path between an engine and a transmission (or drive wheels), and a clutch actuator that switches the clutch between an engaged state and a released state.

Also, while the engine 12 is illustrated as an example of driving power source in the above-described embodiments, a combination of the engine 12 and another prime mover, such as a motor, may be employed as the driving power source. While the clutch 20 is a dry type single plate friction clutch, it may be a wet single-disc friction clutch or a wet multiple-disc friction clutch.

It is to be understood that the above-described embodiments and modified examples are mere examples or forms of implementation of the invention, and that the invention can be embodied with various changes and improvements based on the knowledge of those skilled in the art.

## Claims

1. A vehicle (10) comprising:
an engine (12);
drive wheels (14);
a transmission (18) that provides a part of a power transmission path between the engine (12) and the drive wheels (14);
a clutch (20) configured to connect and disconnect the power transmission path between the engine (12) and the transmission (18);
a clutch actuator (22) configured to switch the clutch (20) between an engaged state and a released state;
an accelerator pedal (40);
a brake pedal (42);
a clutch pedal (38); and
an electronic control unit (50) configured to release the clutch (20) by the clutch actuator (22) when a predetermined first condition is satisfied during traveling of the vehicle (10) in which the clutch (20) is engaged,
the electronic control unit (50) being configured to perform synchronization control for synchronizing a rotational speed of the engine (12) with an input rotational speed of the transmission (18) when the first condition is satisfied during traveling of the vehicle (10) in which the clutch (20) is engaged,
the electronic control unit (50) being configured to change an operating state of the clutch (20) and finish the synchronization control, when the first condition ceases to be satisfied during execution of the synchronization control,
wherein the first condition is satisfied when none of the accelerator pedal (40), the brake pedal (42), and the clutch pedal (38) is operated; and the vehicle is **characterized in that**:
the electronic control unit (50) is configured to change the operating state of the clutch (20) by the clutch actuator (22) according to an amount of operation of the clutch pedal (38) by a driver when the first condition ceases to be satisfied because of operation of the clutch pedal (38) during execution of the synchronization control.

2. The vehicle (10) according to claim 1, wherein
the electronic control unit (50) is configured to finish the synchronization control and perform coasting control for traveling with the clutch (20) released, when a predetermined time elapses from a point in time at which the first condition is satisfied.

3. The vehicle (10) according to claim 2, wherein
the electronic control unit (50) is configured to finish the synchronization control, when the first condition does not cease to be satisfied during execution of the synchronization control, and the predetermined time elapses from the point in time at which the first condition is satisfied.

4. The vehicle (10) according to claim 2 or 3, wherein
the electronic control unit (50) is configured to perform one of control for stopping operation of the engine (12) and control for idling the engine (12), during execution of the coasting control.

5. The vehicle (10) according to any one of claims 1 to 4, further comprising
a motor (MG) coupled to a rotary shaft (34) of the engine (12),
wherein the electronic control unit (50) is configured to perform one of a first control and a second control as the synchronization control, the first control is a control for synchronizing the rotational speed of the engine (12) with the input rotational speed of the transmission (18) by controlling the engine (12), the second control is a control for synchronizing the rotational speed of the engine (12) with the input rotational speed of the transmission (18) by controlling the motor (MG).

6. The vehicle (10) according to claim 5, wherein
the electronic control unit (50) is configured to stop operation of the engine (12) when the second control is performed.

7. The vehicle (10) according to claim 6, further comprising
a power storage device (84) configured to supply and receive electric power to and from the motor (MG),
wherein the electronic control unit (50) is configured to perform the first control when a charging capacity of the power storage device (84) is equal to or smaller than a predetermined capacity.

8. The vehicle (10) according to any one of claims 1 to 7, wherein
the electronic control unit (50) is configured to start releasing the clutch after the synchronization control is started when the first condition is satisfied.

9. The vehicle (10) according to any one of claims 1 to8, wherein
the electronic control unit (50) is configured to engage the clutch (20) by the clutch actuator (22) when the first condition ceases to be satisfied because of operation of at least one of the accelerator pedal (40) and the brake pedal (42) during execution of the synchronization control.

10. The vehicle (10) according to any one of claims 1 to 9, wherein the electronic control unit (50) is configured to finish the synchronization control after change of the operating state of the clutch (20) is completed when the first condition ceases to be satisfied during execution of the synchronization control.

11. A control method for a vehicle (10), the vehicle including
an engine (12),
drive wheels (14),
a transmission (18) that provides a part of a power transmission path between the engine (12) and the drive wheels (14),
a clutch (20) configured to connect and disconnect the power transmission path between the engine (12) and the transmission (18),
a clutch actuator (22) configured to switch the clutch (20) between an engaged state and a released state,
an accelerator pedal (40);
a brake pedal (42); and
a clutch pedal (38),
the control method comprising:
releasing the clutch (20) when a predetermined first condition is satisfied during traveling of the vehicle (10) in which the clutch (20) is engaged;
performing synchronization control for synchronizing a rotational speed of the engine (12) with an input rotational speed of the transmission (18) when the first condition is satisfied during traveling of the vehicle (10) in which the clutch (20) is engaged; and
changing an operating state of the clutch (20) and finishing the synchronization control when the first condition ceases to be satisfied during execution of the synchronization control,
wherein the first condition is satisfied when none of the accelerator pedal (40), the brake pedal (42), and the clutch pedal (38) is operated, and the control method is **characterized in that** it further comprises:
changing the operating state of the clutch (20) by the clutch actuator (22) according to an amount of operation of the clutch pedal (38) by a driver when the first condition ceases to be satisfied because of operation of the clutch pedal (38) during execution of the synchronization control.

## Patentansprüche

1. Fahrzeug (10), umfassend:
einen Motor (12);
Antriebsräder (14);
ein Getriebe (18), das einen Teil eines Kraftübertragungswegs zwischen dem Motor (12) und den Antriebsrädern (14) bereitstellt;
eine Kupplung (20), die konfiguriert ist, um den Kraftübertragungsweg zwischen dem Motor (12) und dem Getriebe (18) zu verbinden und zu trennen;
ein Kupplungsstellglied (22), das konfiguriert ist, um die Kupplung (20) zwischen einem eingerückten Zustand und einem ausgerückten Zustand zu schalten;
ein Gaspedal (40);
ein Bremspedal (42);
ein Kupplungspedal (38); und
eine elektronische Steuereinheit (50), die konfiguriert ist, um die Kupplung (20) durch das Kupplungsstellglied (22) auszurücken, wenn eine vorbestimmte erste Bedingung während der Fahrt des Fahrzeugs (10) erfüllt ist, bei der die Kupplung (20) eingerückt ist,
wobei die elektronische Steuereinheit (50) konfiguriert ist, um eine Synchronisationssteuerung zum Synchronisieren einer Motordrehzahl (12) mit einer Eingangsdrehzahl des Getriebes (18) durchzuführen, wenn die erste Bedingung während der Fahrt des Fahrzeugs (10) erfüllt ist, bei der die Kupplung (20) eingerückt ist,
wobei die elektronische Steuereinheit (50) konfiguriert ist, um einen Betriebszustand der Kupplung (20) zu ändern und die Synchronisationssteuerung zu beenden, wenn die erste Bedingung während der Ausführung der Synchronisationssteuerung nicht mehr erfüllt ist,
wobei die erste Bedingung erfüllt ist, wenn keines von dem Gaspedal (40), dem Bremspedal (42) und dem Kupplungspedal (38) betätigt wird; und das Fahrzeug **dadurch gekennzeichnet ist, dass**:
die elektronische Steuereinheit (50) konfiguriert ist, um den Betriebszustand der Kupplung (20) durch das Kupplungsstellglied (22) gemäß einer Betätigungsgröße des Kupplungspedals (38) durch einen Fahrer zu ändern, wenn die erste Bedingung aufgrund der Betätigung des Kupplungspedals (38) während der Ausführung der Synchronisationssteuerung nicht mehr erfüllt ist.

2. Fahrzeug (10) nach Anspruch 1, wobei
die elektronische Steuereinheit (50) konfiguriert ist, um die Synchronisationssteuerung zu beenden und eine Schubbetriebsteuerung zum Fahren bei ausgerückter Kupplung (20) durchzuführen, wenn eine vorbestimmte Zeit ab einem Zeitpunkt verstreicht, an dem die erste Bedingung erfüllt ist.

3. Fahrzeug (10) nach Anspruch 2, wobei
die elektronische Steuereinheit (50) konfiguriert ist, um die Synchronisationssteuerung zu beenden, wenn die erste Bedingung während der Ausführung der Synchronisationssteuerung nicht mehr erfüllt ist und die vorbestimmte Zeit ab dem Zeitpunkt verstreicht, an dem die erste Bedingung erfüllt ist.

4. Fahrzeug (10) nach Anspruch 2 oder 3, wobei
die elektronische Steuereinheit (50) konfiguriert ist, um eine von der Steuerung zum Anhalten des Betriebs des Motors (12) und eine Steuerung zum Leerlauf des Motors (12) während der Ausführung der Schubbetriebsteuerung durchzuführen.

5. Fahrzeug (10) nach einem der Ansprüche 1 bis 4, ferner umfassend
einen Motor (MG), der mit einer Drehwelle (34) des Motors (12) gekoppelt ist,
wobei die elektronische Steuereinheit (50) konfiguriert ist, um eine von einer ersten Steuerung und einer zweiten Steuerung als Synchronisationssteuerung auszuführen, wobei die erste Steuerung eine Steuerung zum Synchronisieren der Drehzahl des Motors (12) mit der Eingangsdrehzahl des Getriebes (18) durch Steuern des Motors (12) ist, die zweite Steuerung eine Steuerung zum Synchronisieren der Drehzahl des Motors (12) mit der Eingangsdrehzahl des Getriebes (18) durch Steuern des Motors (MG) ist.

6. Fahrzeug (10) nach Anspruch 5, wobei
die elektronische Steuereinheit (50) konfiguriert ist, um den Betrieb des Motors (12) anzuhalten, wenn die zweite Steuerung ausgeführt wird.

7. Fahrzeug (10) nach Anspruch 6, ferner umfassend
eine Energiespeichervorrichtung (84), die konfiguriert ist, um elektrische Energie zu und von dem Motor (MG) zuzuführen und zu empfangen,
wobei die elektronische Steuereinheit (50) konfiguriert ist, um die erste Steuerung auszuführen, wenn eine Ladekapazität der Energiespeichervorrichtung (84) gleich wie oder kleiner als eine vorbestimmte Kapazität ist

8. Fahrzeug (10) nach einem der Ansprüche 1 bis 7, wobei
die elektronische Steuereinheit (50) konfiguriert ist, um mit dem Ausrücken der Kupplung zu beginnen, nachdem die Synchronisationssteuerung gestartet wurde, wenn die erste Bedingung erfüllt ist.

9. Fahrzeug (10) nach einem der Ansprüche 1 bis 8, wobei
die elektronische Steuereinheit (50) konfiguriert ist, um die Kupplung (20) durch das Kupplungsstellglied (22) einzurücken, wenn die erste Bedingung nicht mehr erfüllt ist, weil mindestens eines von dem Gaspedal (40) und dem Bremspedal (42) während der Ausführung der Synchronisationssteuerung betätigt wird.

10. Fahrzeug (10) nach einem der Ansprüche 1 bis 9, wobei die elektronische Steuereinheit (50) konfiguriert ist, um die Synchronisationssteuerung nach Änderung des Betriebszustands der Kupplung (20) zu beenden, wenn die erste Bedingung während der Ausführung der Synchronisationssteuerung nicht mehr erfüllt ist.

11. Steuerverfahren für ein Fahrzeug (10), wobei das Fahrzeug Folgendes beinhaltet
einen Motor (12),
Antriebsräder (14),
ein Getriebe (18), das einen Teil eines Kraftübertragungswegs zwischen dem Motor (12) und den Antriebsrädern (14) bereitstellt,
eine Kupplung (20), die konfiguriert ist, um den Kraftübertragungsweg zwischen dem Motor (12) und dem Getriebe (18) zu verbinden und zu trennen,
ein Kupplungsstellglied (22), das konfiguriert ist, um die Kupplung (20) zwischen einem eingerückten Zustand und einem ausgerückten Zustand zu schalten,
ein Gaspedal (40);
ein Bremspedal (42); und
ein Kupplungspedal (38),
wobei das Steuerverfahren Folgendes umfasst:
Ausrücken der Kupplung (20), wenn eine vorbestimmte erste Bedingung während der Fahrt des Fahrzeugs (10) erfüllt ist, bei der die Kupplung (20) eingerückt ist;
Ausführen einer Synchronisationssteuerung zum Synchronisieren einer Drehzahl des Motors (12) mit einer Eingangsdrehzahl des Getriebes (18), wenn die erste Bedingung während der Fahrt des Fahrzeugs (10) erfüllt ist, bei der die Kupplung (20) eingerückt ist; und
Ändern eines Betriebszustands der Kupplung (20) und Beenden der Synchronisationssteuerung, wenn die erste Bedingung während der Ausführung der Synchronisationssteuerung nicht mehr erfüllt ist,
wobei die erste Bedingung erfüllt ist, wenn keines von dem Gaspedal (40), dem Bremspedal (42) und dem Kupplungspedal (38) betätigt wird, und das Steuerverfahren **dadurch gekennzeichnet ist, dass** es ferner Folgendes umfasst:
Ändern des Betriebszustands der Kupplung (20) durch das Kupplungsstellglied (22) gemäß einer Betätigungsgröße des Kupplungspedals (38) durch einen Fahrer, wenn die erste Bedingung aufgrund der Betätigung des Kupplungspedals (38) während der Ausführung der Synchronisationssteuerung nicht mehr erfüllt ist.

## Revendications

1. Véhicule (10) comprenant:
un moteur (12) ;
des roues motrices (14) ;
une transmission (18) qui forme une partie d'un trajet de transmission de puissance entre le moteur (12) et les roues motrices (14) ;
un embrayage (20) conçu pour raccorder et détacher le trajet de transmission de puissance entre le moteur (12) et la transmission (18) ;
un actionneur d'embrayage (22) conçu pour commuter l'embrayage (20) entre un état engagé et un état relâché ;
une pédale d'accélérateur (40) ;
une pédale de frein (42) ;
une pédale d'embrayage (38) ; et
une unité de commande électronique (50) conçue pour relâcher l'embrayage (20) par l'actionneur d'embrayage (22) lorsqu'une première condition prédéterminée est satisfaite pendant le déplacement du véhicule (10) dans laquelle l'embrayage (20) est engagé,
l'unité de commande électronique (50) étant configurée pour réaliser une commande de synchronisation destinée à synchroniser une vitesse de rotation du moteur (12) avec une vitesse de rotation d'entrée de la transmission (18) lorsque la première condition est satisfaite pendant le déplacement du véhicule (10) dans laquelle l'embrayage (20) est engagé,
l'unité de commande électronique (50) étant configurée pour modifier un état d'utilisation de l'embrayage (20) et mettre fin à la commande de synchronisation, lorsque la première condition cesse d'être satisfaite pendant l'exécution de la commande de synchronisation,
la première condition étant satisfaite lorsqu'aucune de la pédale d'accélérateur (40), de la pédale de frein (42) et de la pédale d'embrayage (38) n'est utilisée ; et le véhicule est **caractérisé en ce que** :
l'unité de commande électronique (50) est configurée pour modifier l'état d'utilisation de l'embrayage (20) par l'actionneur d'embrayage (22) selon une quantité d'utilisation de pédale d'embrayage (38) par un conducteur lorsque la première condition cesse d'être satisfaite du fait de l'utilisation de la pédale d'embrayage (38) pendant l'exécution de la commande de synchronisation.

2. Véhicule (10) selon la revendication 1, dans lequel
l'unité de commande électronique (50) est configurée pour mettre fin à la commande de synchronisation et réaliser une commande de marche en roue libre pour un déplacement avec l'embrayage (20) relâché, lorsqu'une durée prédéterminée s'écoule à partir d'un point dans le temps auquel la première condition est satisfaite.

3. Véhicule (10) selon la revendication 2, dans lequel
l'unité de commande électronique (50) est configurée pour mettre fin à la commande de synchronisation, lorsque la première condition ne cesse pas d'être satisfaite pendant l'exécution de la commande de synchronisation, et la durée prédéterminée s'écoule à partir du point temporal auquel la première condition est satisfaite.

4. Véhicule (10) selon la revendication 2 ou 3, dans lequel
l'unité de commande électronique (50) est configurée pour réaliser l'une d'une commande destinée à arrêter le fonctionnement du moteur (12) et d'une commande destinée à mettre le moteur (12) au ralenti, pendant l'exécution de la commande de marche en roue libre.

5. Véhicule (10) selon l'une quelconque des revendications 1 à 4, comprenant en outre
un moteur électrique (MG) couplé à un arbre rotatif (34) du moteur (12),
l'unité de commande électronique (50) étant configurée pour réaliser l'une d'une première commande et d'une deuxième commande en tant que commande de synchronisation, la première commande étant une commande destinée à synchroniser la vitesse de rotation du moteur (12) avec la vitesse de rotation d'entrée de la transmission (18) par une commande du moteur (12), la deuxième commande étant une commande destinée à synchroniser la vitesse de rotation du moteur (12) avec la vitesse de rotation d'entrée de la transmission (18) par une commande du moteur électrique (MG).

6. Véhicule (10) selon la revendication 5, dans lequel
l'unité de commande électronique (50) est configurée pour arrêter le fonctionnement du moteur (12) lorsque la deuxième commande est réalisée.

7. Véhicule (10) selon la revendication 6, comprenant en outre
un dispositif de stockage d'énergie (84) configuré pour fournir et recevoir de l'électricité vers et depuis le moteur électrique (MG),
l'unité de commande électronique (50) étant configurée pour réaliser la première commande lorsqu'une capacité de charge du dispositif de stockage d'énergie (84) est inférieure ou égale à une capacité prédéterminée.

8. Véhicule (10) selon l'une quelconque des revendications 1 à 7, dans lequel
l'unité de commande électronique (50) est configurée pour commencer à relâcher l'embrayage après le début de la commande de synchronisation lorsque la première condition est satisfaite.

9. Véhicule (10) selon l'une quelconque des revendications 1 à 8, dans lequel
l'unité de commande électronique (50) est configurée pour engager l'embrayage (20) par l'actionneur d'embrayage (22) lorsque la première condition cesse d'être satisfaite du fait de l'utilisation d'au moins l'une de la pédale d'accélérateur (40) et de la pédale de frein (42) pendant l'exécution de la commande de synchronisation.

10. Véhicule (10) selon l'une quelconque des revendications 1 à 9, dans lequel l'unité de commande électronique (50) est configurée pour mettre fin à la commande de synchronisation à la fin d'une modification de l'état d'utilisation de l'embrayage (20) lorsque la première condition cesse d'être satisfaite pendant l'exécution de la commande de synchronisation.

11. Procédé de commande pour un véhicule (10), le véhicule comprenant
un moteur (12),
des roues motrices (14),
une transmission (18) qui forme une partie d'un trajet de transmission de puissance entre le moteur (12) et les roues motrices (14),
un embrayage (20) conçu pour raccorder et détacher le trajet de transmission de puissance entre le moteur (12) et la transmission (18),
un actionneur d'embrayage (22) conçu pour commuter l'embrayage (20) entre un état engagé et un état relâché,
une pédale d'accélérateur (40) ;
une pédale de frein (42) ; et
une pédale d'embrayage (38),
le procédé de commande comprenant :
le relâchement de l'embrayage (20) lorsqu'une première condition prédéterminée est satisfaite pendant le déplacement du véhicule (10) dans laquelle l'embrayage (20) est engagé ;
la réalisation d'une commande de synchronisation destinée à synchroniser une vitesse de rotation du moteur (12) avec une vitesse de rotation d'entrée de la transmission (18) lorsque la première condition est satisfaite pendant le déplacement du véhicule (10) dans laquelle l'embrayage (20) est engagé ; et
la modification d'un état d'utilisation de l'embrayage (20) et la fin de la commande de synchronisation lorsque la première condition cesse d'être satisfaite pendant l'exécution de la commande de synchronisation,
la première condition étant satisfaite lorsqu'aucune de la pédale d'accélérateur (40), de la pédale de frein (42) et de la pédale d'embrayage (38) n'est utilisée, et le procédé de commande étant **caractérisé en ce qu'**il comprend en outre :
la modification de l'état d'utilisation de l'embrayage (20) par l'actionneur d'embrayage (22) selon une quantité d'utilisation de pédale d'embrayage (38) par un conducteur lorsque la première condition cesse d'être satisfaite du fait de l'utilisation de la pédale d'embrayage (38) pendant l'exécution de la commande de synchronisation.
